(19) Europäisches Patentamt
European Patent Office
Office européen des brevets

(11) Publication number: **0 202 965 B1**

(12) # EUROPEAN PATENT SPECIFICATION

(45) Date of publication of the patent specification: **27.09.89**

(51) Int. Cl.⁴: **C08F 4/00**, C08G 61/02

(21) Application number: **86400748.9**

(22) Date of filing: **08.04.86**

(54) **Oligomer resins and processes for their preparation.**

(30) Priority: **09.04.85 JP 73607/85**
**15.07.85 JP 154239/85**

(43) Date of publication of application:
**26.11.86 Bulletin 86/48**

(45) Publication of the grant of the patent:
**27.09.89 Bulletin 89/39**

(84) Designated Contracting States:
**DE FR GB**

(56) References cited:
**CHEMICAL ABSTRACTS, vol. 79, no. 26, 31st December 1972, page 18, abstract no. 147106d, Columbus, Ohio, US**

(73) Proprietor: **KAWASAKI STEEL CORPORATION, 1-28, Kitahonmachi-Dori 1-Chome, Chuo-ku Kobe-Shi Hyogo 650(JP)**
Proprietor: **KAWASAKI STEEL TECHNO-RESEARCH CORPORATION, 2-3, Uchisaiwai-cho 2-chome, Chiyoda-ku Tokyo(JP)**

(72) Inventor: **Naruse, Yoshihiro Technical Research Devision, Kawasaki Steel Corp. 1, Kawasaki-cho, Chiba-shi Chiba-Ken(JP)**
Inventor: **Sakai, Sumiko Technical Research Devision, Kawasaki Steel Corp. 1, Kawasaki-cho, Chiba-shi Chiba-Ken(JP)**
Inventor: **Miyagawa, Tsugio Technical Research Devision, Kawasaki Steel Corp. 1, Kawasaki-cho, Chiba-shi Chiba-Ken(JP)**
Inventor: **Oshima, Ryoichi Technical Research Devision, Kawasaki Steel Corp. 1, Kawasaki-cho, Chiba-shi Chiba-Ken(JP)**

(74) Representative: **Nony, Michel et al, Cabinet NONY & CIE 29, rue Cambacérès, F-75008 Paris(FR)**

**EP 0 202 965 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

FIELD OF THE INVENTION

The present invention relates to oligomer resins and processes for their preparation, and particularly to styrene oligomers, petroleum resins and coumarone-indene resins, and their preparation by way of cation-polymerizing vinyl compounds with the aid of an ion exchange material serving as a catalyst. Furthermore, the invention relates to a process for preparing a high-boiling-point hydrocarbon oil containing diarylethanes and oligomers of styrenes by allowing alkylbenzene-class compounds to react with styrene-class compounds with the aid of an ion exchange material serving as a catalyst.

DESCRIPTION OF THE PRIOR ART

Petroleum resins and coumarone-indene resins which find common use as rubber softeners, adhesive additives, solvents for paint and ink and traffic paints, are prepared from naphtha derived from cat-cracked petroleum and solvent naphtha derived from coal-tar, with the aid of a homogenous acid catalyst such as sulfuric acid, boron trifluoride, anhydrous aluminum chloride without special separation and purification. With respect to the prior art, catalysts utilized in preparing these resins include sulfuric acid (Japanese Patent Publication (Tokko) Showa 45-30340), phosphoric acid and mixtures thereof (Japanese Patent Publication (Tokko) Showa 47-47311), acting as Brønsted acids, and boron trifluoride (Japanese Patent Publication (Tokko) Showa 32-790) and anhydrous aluminum chloride (only the case of petroleum resin) acting as Lewis acids. In additional, boron trifluoride-ethylether complexes have been used.

With respect to processes for preparing styrene-class oligomers, many studies have been done on dimerization of α-methylstyrene and processes using mineral acids, Lewis acids or solid acid catalysts are known.

A process for preparing α-olefin class more than trimers and heavier is disclosed in Japanese Provisional Publication (Tokkai) Showa 48-17588, and a process for preparing oligomers of relatively high molecular weight by means of thermal polymerization is revealed in Japanese Provisional Publication (Tokkai) 48-12887. However, there are no known processes by which oligomers in the dimer to tetramer range can selectively and with high yield be produced.

Japanese Provisional Publication (Tokkai) Showa 55-104219 reveals that styrene oligomers consisting mainly of trimers and tetramers may be prepared with the aid of ion exchange resins in styrene system. However in this case, the yield for styrene oligomers is low and only in the case of a very low concentrations of styrenes can a yield of 70 to 90% be obtained. For example, the oligomer yield is lower than 90% at temperatures between 50 and 100°C at a styrene concentration of 1.2%, and the oligomer yield decreases remarkably as the concentration of styrene increases.

The prior art processes have the following disadvantages:

(i) Processes for separating and collecting catalysts are required after the polymerization reaction if any homogenous acid catalysts are used, thus making the manufacturing process complicated.

(ii) If a catalyst of the sulfuric acid system is used, the coloring for the resin obtained is noticeably degraded.

(iii) If a homogenous acid catalyst is used, a great deal of reaction heat is generated by polymerization in the initial stage and the reaction tends to be too abrupt. Therefore, control of the polymerization reaction temperature, which affects the character (coloring, polymerization degree) of the resin obtained is difficult.

(iv) In prior art methods, only oligomers between trimers and molecular weights of about 1000 over a wide molecular weight distribution are obtained when styrenes of high concentration are used as starting material and halides are used as catalysts or when thermal polymerization is carried out. Furthermore, where an ion exchange resin of a styrene (or styrenedivinylbenzene) system is utilized as a catalyst, it is necessary for the concentration of the starting material to be very low (≦10%) if you want to obtain a high styrene oligomer yield. It is extremely disadavantageous in terms of energy consumption, the cost of separating products and production efficiency if the polymerization reaction is performed with a starting material of such low concentration. Furthermore, the heatresistance of the ion exchange resins mentioned above is also subject of debate.

SUMMARY OF THE INVENTION

Therefore, it is an object of the invention to provide a process for preparing superior resins which do not exhibit the disadvantages mentioned above by using a catalyst which differs from prior art catalysts.

In order to accomplish the aforementioned and other objects, the present invention is characterized by preparing oligomer resins from compounds containing carbon-carbon unsaturated double bonds with the aid of a perfluoroalkane-class ion exchange material serving as a catalyst.

The process for preparing oligomer resins according to the invention is further characterized by allowing compounds containing carbon-carbon unsaturated double bonds, preferably a styrene-class compound such as styrene and α-methylstyrene, and a vinyl compound such as α-olefin, indene, coumarone, acenaphthylene to polymerize, with the aid of a perfluoroalkane-class ion exchange material serving as a catalyst, preferably from the viewpoint of corrosion, thermal and solvent resistance an ion exchange membrane of which the matrix comprises fluorine-containing resins, and $-SO_3H$ groups as a functional group.

The process for preparing oligomer resins according to the invention is further characterized by allowing compounds containing carbon-carbon unsaturated double bonds to polymerize with the aid of a perfluoroalkane-class ion exchange material serving as a catalyst in the presence or absence of solvent. Solvent is not indispensable, but solvents such as $CCl_4$, cyclohexane, benzene, alkylbenzene-class compounds may be used. If an alkylbenzene-class compound is used as a solvent, additional oligomeric products of the styrene-class and the alkylbenzene-class will also be produced in accordance with reaction conditions.

An example of preparing resins from cracked-petroleum naphtha or solvent naphtha is described below, but the invention is not limited to this and may be widely applied to cation polymerization of vinyl compounds. The cation exchange membrane is used in 0.1 weight % excess with respect to the resiniferous vinyl compound in the cracked-petroleum naphtha or solvent naphtha starting material, and the polymerization reaction is carried out under agitation at a temperature of 40 to 160°C over a time period of between 15 minutes and 10 hours so as to bring all of the starting material into contact with the cation exchange membrane (polymerization process). The polymerization reaction solution obtained is drawn out the reaction vessel without special processing for separating the catalyst. The reaction solution is distilled under reduced pressure. When the product is separated from the distillate by means of vacuum distillation, a resin of low molecular weight is obtained as a residue (resin-collecting process). A petroleum resin is obtained in cases where cracked petroleum naphtha is the starting material, and a coumarone-indene resin is obtained in cases where solvent naphtha is the starting material.

The starting material oil, specifically cracked-petroleum naphtha and solvent naphtha, contains vinyl compounds such as styrenes, coumarones, indenes. The starting material oil is used in the polymerization process after previous processing for adapting the starting material oil to requirements. For example, in cases where a coumarone-indene resin is prepared, basic materials which act as catalyst poisons causing accelerated coloring of the resin obtained are removed from solvent naphtha collected by distilling coal-tar by means of washing with sulfuric acid or other known processes, and then the residue is distilled to adjust the composition of the resiniferous vinyl compound constituent. The distillate boiling point of 130 to 200°C is utilized.

According to the invention, a cation exchange membrane which is a perfluoroalkane-class ion exchange material serving as a polymerization catalyst is utilized in the form of a ribbon or plate fixed to an agitator, or in the form of particle in liquid phase fluid state or in the packed state. Therefore, the polymerization reaction solution obtained is quite easily separated from the cation exchange membrane by drawing it out of the reaction vessel without special processing for separating catalysts which was previously required. Therefore, residual resins are easily collected by directly distilling the polymerization reaction solution drawn out of reaction vessel. Thus, the process of retrieving the resins according to the invention may be remarkably simpler than prior art methods. Furthermore, polymerization is subdued in the initial stages of the reaction according to the invention since polar groups in the cation exchange membrane are not freely mobile in the reagent solution during the polymerization reaction. Therefore, controlling the temperature of the polymerization reaction is facilitated.

Furthermore, it is a second object of the invention to accomplish a superior process for preparing a high-boiling-point hydrocarbon oil with the aid of a perfluoroalkane-class ion exchange material serving as a catalyst, the process characterized in that:

(1) plastic material containing oligomers of diarylethanes and styrenes may be made from alkylbenzene-class and styrene-class compounds in a one-step manufacturing process by which various product compositions may be obtained and controlled according to use,

(2) residual catalysts do not remain in the products,

(3) no catalyst-removing step is required, so that the overall process consumes relatively little energy, and

(4) products may not only contain two benzene rings but also four benzene rings (for example, combined forms of styrene tetramers or linear styrene dimers and diarylethane) in order to improve aromatic properties and static heat-stability of the products.

The invention relates to a process using a particular cation exchange membrane as a catalyst in cases where a high-boiling-point hydrocarbon oil, which contains diarylalkane and styrene-class dimers to tetramers and two to four benzene rings, are manufactured from alkylbenzene-class and styrene-class compounds.

The process according to the invention may be achieved by means of:

(1) mixing alkylbenzene-class starting material with styrene-class starting material in desired proportions (a first step),
(2) preheating the starting material up to the reaction temperature (30 to 140°C) according to the desired product (a second step),
(3) reacting in the presence of an ion exchange membrane catalyst (a third step), and
(4) separating the product from contaminants (a fourth step).

With respect to the alkylbenzene-class starting material, compounds represented by the general formula:

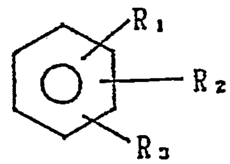

... ( I )

may be used, in which $R_1$, $R_2$ and $R_3$ represent hydrogen or alkyl groups with a carbon number of no more than 3, and in which at least one of $R_1$ to $R_3$ does not represent hydrogen. For example, one may use toluene, ethylbenzene, o-xylene, m-xylene, p-xylene, various kinds of trimethylbenzene, isopropylbenzene. These alkylbenzene starting materials may be used singly or as mixtures. Styrene, α-methylstyrene, p-methylstyrene may be used as the other, styrene-class starting material. The proportions of these starting materials, alkylbenzene-class and styrene-class, may be arbitrarily selected and the composition of the starting material may be varied according to the desired composition of the finished product. The mixture proportion of alkylbenzene-class and styrene-class may be generally in weight proportions of from 99:1 to 1:99.

The ion exchange membrane used as a catalyst according to the invention is the cation exchange membrane (for example, DuPont Corp. "Nafion-177, 324") with $-SO_3H$ groups, and may be used in proportions of 0.1 weight % or more of the styrene-class compounds in the reagents. A high-boiling-point hydrocarbon oil containing linear or cyclic dimers to tetramers of diarylalkane and styrene may be obtained at desired compositions by changing the reaction conditions (concentration of styrene-class compounds, reaction temperature, amount of catalysts and contact conditions) in this catalyst system. Furthermore, the catalyst-removing step from prior art acid catalyst technique is not required since the catalyst used is in membrane form.

The system of the process according to the invention is described below with reference to the accompanying drawing.

As shown in drawing, the above-mentioned alkylbenzene and styrene starting materials are introduced in starting material tanks 1 and 2, these materials are fed into a mixer 4 from the respective tanks 1 and 2 by means of pumps 3, and then both materials are fully mixed here (the first step). After the materials have been mixed by the mixer 4, the mixture is sent to a preheater 5 and heated to the desired reaction temperature (30 to 140°C) by a suitable heating medium, and then the heated starting material mixture is sent to a reaction vessel 6 (the second step). The subsequent third step in which a reaction is carried out under an ion exchange membrane, may be carried out by means of a batch-type reaction apparatus, and preferably is carried out by means of a continuous-tank-type reaction apparatus 6 having an agitator. In the reaction vessel 6, ion exchange membranes may be arranged in the form of films or ribbons. The reaction temperature may be controlled e.g. by means of a jacket-type heater. The reaction temperature according to the invention is between 30 and 140°C. It is the advantage in the process according to the invention that reaction heat due to polymerization of styrene is not abruptly generated in the reaction vessel even if high concentrations of styrene are used. This is the unique advantage of ion exchange membrane catalysts, and control of the reaction temperature may be very easily achieved.

After reaction, the mixture is fed into a solvent-collecting apparatus 7 and the solvent is collected. The unreacted alkylbenzeneclass compounds may be collected e.g. by a distilling apparatus 8 working under reduced pressure and the product may be obtained from the bottom of the distilling apparatus 8, in cases where the reaction is driven to completion with regard to styrenes. The alkylbenzene-class compounds collected may be used again, but it would be more practical for the unreacted material collected to be used as a solvent since the composition after reaction will vary according to differences in reactivity of the constituent in cases where mixtures of alkylbenzene are used as a starting material. In cases where a single constituent is used, it is advantageous for the unreacted material to be collected for reuse.

The high-boiling-point, aromatic oil obtained by the above-mentioned process according to the invention can find broad uses as; (1) electrical insulating oil, (2) oil for non-carbon paper, (3) ink or vehicle for unsaturated polyesters, (4) substitutes for PCB, by itself or mixed with other hydrocarbon oil and (5) ram material for traction fluids.

## BRIEF DESCRIPTION OF THE DRAWINGS

Drawing is a flowdiagram of the process according to the invention carried out as a continuous process.

## DESCRIPTION OF THE PREFERRED EMBODIMENTS

Preferred embodiments of the invention are described below. In Examples, "parts" means "parts by weight" if it is not otherwise described. A 300cc three-neck distillation flask with a water-cooled condenser is utilized as a reaction vessel. An agitator is mounted on the central port of the three-neck distillation flask, and the other necks are utilized as ports through which a condenser and a thermometer are inserted. An oil exchange membrane trade marked "Nafion" (produced by DuPont Corp. of USA) was used.

### Example 1

Solvent naphtha derived from coal-tar was treated for removal of basic compounds by washing with sulfuric acid, and then was distilled to obtain a distillate with a boiling point of 130 to 200°C. 0.6 parts of cation exchange membrane was mounted on an agitator for 100 parts of starting material oil to be treated. They were allowed to react at 100°C for 4 hours under agitation so as to bring all of the starting material oil into contact with the cation exchange membrane. After reaction, the reagent solution was drawn out of the reaction vessel and immediately distilled under reduced pressure. Distillates with boiling points lower than 235°C at atmospheric pressure were removed, and 36 parts of resin were obtained as a residue. This represented a yield of 64.3% with respect to the vinyl compounds, such as indenes, coumarones, styrenes, contained in the starting material. The resin obtained was yellow and the coumarone resin was of low polymerization degree (polymerization degree 2 to 4, mainly 2) and fluid at room temperature.

### Example 2

20 parts of styrene and 30 parts of indene were mixed with 50 parts of mixed xylenes. This starting material oil was added to an agitator covered with 0.4 parts of cation exchange membrane as similar to Example 1 serving as a catalyst. They were allowed to react at 80°C for 4 hours under agitation so as to bring all of the starting material oil into contact with the cation exchange membrane. After reaction, the reagent solution was drawn out of the reaction vessel and immediately distilled under reduced pressure. 28 parts of light-colored liquid resin were obtained as a residue. This was equivalent to a 56% conversion to resiniferous material. The average molecular weight was 240 and the resins obtained were mainly dimers.

### Example 3

20g of styrene was allowed to react in the presence of 30g of solvent xylene and 0.4 g of cation exchange membrane fixed to an agitator in a water-cooled reaction vessel at 100°C for 2 hours. About 10μ1 of reagent solution was sampled periodically during the reaction and analyzed by gas chromatography. Consequently, it was found that the styrene peak disappeared after 1 hour. The reagent solution was removed after 2 hours and distilled under reduced pressure. The xylene solvent was collected, and 21.6g of fluid oligomer was obtained as a residue. The yield thereof was 108%. Therefore, it is recognized that an adduct derived from xylene existed in the product.

### Example 4

20g of α-methylstyrene was allowed to react at 80°C for 4 hours in the presence of 30g of solvent xylene and 0.24g of cation exchange membrane according to Example 3. After the reaction, solvent and unreacted material were removed by distillation under reduced pressure, and 9.0g of fluid material was obtained as a residue. The product was an oligomer mainly comprising dimers to tetramers of α-methylstyrene.

### Example 5 to 10

20g of styrene was allowed to react in the presence of solvent benzene or 30g of xylene and 0.4g of cation exchange membrane at various reaction temperatures for a time period of between 30 minutes and 2 hours. After the reaction, the solvent was collected and an oligomer composition was obtained as a residue. Their products were analyzed by gas chromatography. Consequently, it was found that the products comprised dimers to tetramers. The yields of the oligomeric materials produced and the dimer content (weight proportion) relative to other constituents are given in Table 1.

Table 1

| | starting material/ solvent | catalyst ion exchange membrane | reaction conditions (temperature time) | product yield (%) | dimer/other constituents (weight proportion) |
|---|---|---|---|---|---|
| 5 | styrene/benzene | 0.4 g | 80°C, 2 h | 84.6 | 1:4.0 |
| 6 | styrene/benzene | 0.4 g | 100°C, 1 h | 108.0 | 1:1.1 |
| 7 | styrene/benzene | 0.4 g | 120°C, 2 h | 109.5 | 1:0.94 |
| 8 | styrene/benzene | 0.4 g | 120°C, 1 h | 106.0 | 1:0.95 |
| 9 | styrene/benzene | 0.4 g | 120°C, 0.5 h | 98.0 | 1:1.2 |
| 10 | styrene/benzene | 0.4 g | 140°C, 0.5 h | 128.5 | 1:0.63 |

Example 11

A reaction was carried out at 80°C for 2 hours according to Example 3 except that the starting material contained only 50g of styrene without solvent. Afer the reaction, the product was separated from unreacted styrene by means of distillation under reduced pressure. The product was mainly oligomers comprising dimers and tetramers of styrene.

Example 12 to 17

Styrene oligomers were manfactured at reaction temperatures of 25°C, 40°C, 60°C, 100°C, 120°C and 140°C according to Example 11. The product yield increasaed in approximately direct proportion with temperature, and was approximate 100% at a reaction temperature of 140°C. The average molecular weight of the oligomer resins obtained at each temperature was about 300 to 600, and decreased as reaction temperatures increased.

Example 18

A reaction was carried out at 80°C for 2 hours according to Example 11 except that 20g of acenaphthylenes was used as a starting material and 30g of benzene as a solvent. The solvent and the unreacted material were removed, and 18.9g of resin was obtained. The yield was 94.5% with respect to the starting material.

As mentioned above, a resin collecting process may be remarkably simplified and abrupt polymerization due to excessive reaction heat in the initial stages of polymerization may be prevented by the invention, in that the catalyst-separation process and the collection process may be omitted after polymerization by virtue of utilizing an ion exchange membrane as a polymerization catalyst.

Furthermore, the products according to the invention have a very narrow molecular weight distribution, are easily soluble in various solvents, and are also suitable for use as compounding agents, diluents.

Example 19

5g of styrene and 45g of o-xylene were placed in a 300-ml three-neck flask with a cooler and a port for a thermometer, 0.04g of ion exchange membrane was mounted on a agitator in the form of ribbons, and then, after $N_2$ substitution, they were allowed to react at 120°C for 1 hour. The catalyst-covered agitator was removed from the reaction vessel, the contents of the flask after reaction vessel, the contents of the flask after reaction were distilled, and 6.1g of high-boiling-point oil was obtained. The yield of this oil was 122% with respect to the styrene. Gas chromatography (GC), gel permeation chromatography (GPC) on the reaction product showed mainly dimers containing 3,4-xylylphenylethane

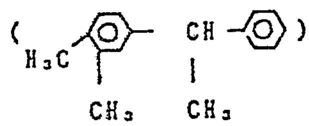

and the average molecular weight obtained by GPC was 246.

Example 20

A reaction was carried out according to Example 19 except that an m-xylene was substituted for the oxylene. 3.9g of product was obtained by this reaction, the yield thus being 78% with respect to the styrene. Analysis by GC showed the proportion of dimers to tetramers to be 83.9 : 12.3.

Example 21

A reaction was carried out according to Example 19 except that a p-xylene was substituted for the oxylene. 1.9g of product was obtained by this reaction, the yield thus being 28% with respect to the styrene. Analysis by GC showed the proportion of dimers to tetramers to be 68.5 : 28.2

Example 22 to 26

Reactions were carried out at 120°C for 2 hours according to Example 19 except that quantitative relations of mixed xylenes and styrenes were as shown in Table 2 and the amount of catalyst was 0.8% with respect to the styrene. The yield, the average molecular weight and other properties of the product obtained by this reaction (weight % with respect to the styrene) are shown in Table 2.

Table 2

| Preferred Embodiments | Styrene (g)/ Mixed xylene (g) | Yield (%) | Average Molecular Weight | Iodine Value |
|---|---|---|---|---|
| 4 | 30/20 | 104 | 373 | 16.43 |
| 5 | 20/30 | 120 | 329 | 12.80 |
| 6 | 12.5/37.5 | 119 | 273 | 11.40 |
| 7 | 5/45 | 138 | 252 | 5.04 |
| 8 | 2.5/47.5 | 164 | 242 | 4.22 |

Example 27 to 30

Reactions were carried out according to Example 19 except that the concentration of the styrene was fixed at 10% by weight and the reaction temperatures were as shown in Table 3. Also, the reactions were all carried out at the respective reaction temperatures for 1 hour. The yield and average molecular weight of the products obtained at the various reaction temperatures are shown in Table 3.

Table 3

| Preferred Embodiments | Reaction Temperature | Yield (%) | Average Molecular Weight |
|---|---|---|---|
| 9 | 80°C | 50 | 275 |
| 10 | 100°C | 54 | 273 |
| 11 | 120°C | 74 | 261 |
| 12 | 140°C | 92 | 264 |

Example 31

100g of styrene, 400g of mixed xylene and 2g of ion exchange membrane catalyst (2% with respect to the styrene) were used, and the reaction as carried out at 140°C for 1 hour. In this case, reaction was carried out according to Example 19 except that the capacity of reaction vessel as 11. The yield of the product obtained by this reaction as 156% with respect to the styrene and the average molecular weight thereof was 253.6. The boiling point is presumed to be in the range of 310 to 450°C based on comparisons with common compounds.

An example of the process using a batch-type reaction apparatus according to the invention as described above, but the invention is not limited to batch-type reaction apparatus and may be profitably carried out as a continuous process, as shown in drawing.

## Claims

1. A process for preparing oligomer resins from compounds containing carbon-carbon unsaturated double bonds with the aid of a perfluoroalkane-class ion exchange material serving as a catalyst.

2. A process as set forth in claim 1, characterized in that said ion exchange material is mounted on an agitator and reaction is carried out under agitation so as to bring all of the starting materials into contact with the ion exchange material.

3. A process as set forth in claim 1, characterized in that said ion exchange material is utilized in the form of particles in the liquid phase fluid state.

4. A process as set forth in claim 1, characterized in that said ion exchange material is utilized in the form of particles in the packed phase.

5. A process as set forth in claim 1, wherein said compounds containing unsaturated bonds are selected from among styrene, methylstyrene, indene, coumarone and acenaphthylene.

6. A process as set forth in claim 1, characterized in that said compounds are a mixture of compounds selected from among styrene, methylstyrene, indene, coumarone and acenaphthylene.

7. A process as set forth in claim 1, wherein the matrix of said ion exchange material comprises fluorine-containing resins, and said ion exchange material has functional groups of $-SO_3H$.

8. A process as set forth in any one of claim 2 to 4, wherein said compounds containing unsaturated bonds are selected from among styrene, methylstyrene, indene, coumarone and acenaphthylene.

9. A process as set forth in any one of claim 2 to 4, characterized in that said compounds are a mixture of compounds selected from among styrene, methylstyrene, indene, coumarone and acenaphthylene.

10. A process as set forth in any one of claim 2 to 4, wherein the matrix of said ion exchange material comprises fluorine-containing resins, and said ion exchange material has functional groups of $-SO_3H$.

11. A process as set forth in claim 10, wherein said compound containing unsaturated bonds is selected from among styrene, methylstyrene, indene, coumarone and acenaphthylene.

12. A process as set forth in claim 10, characterized in that said compounds are mixture of compounds selected from among styrene, methylstyrene, indene, coumarone and acenaphtylene.

13. A process as set forth in any one of claim 2 to 4, characterized in that solvent naphtha derived from coal-tar is treated for removal of basic compounds by washing with sulfuric acid, then distilled to obtain a distillate with a boiling point of 130 to 200°C, and then allowed to react with 0.6 parts of ion exchange membrane with respect to 100 parts of starting material at 100°C for 4 hours.

14. A process as set forth in any one of claim 2 to 4, characterized in that a mixture of 20 parts of styrene, 30 parts of indene and 50 parts of mixed xylenes and 0.4 parts of the ion exchange material are allowed to react at 80°C for 4 hours.

15. A process as set forth in any one of claim 2 to 4, characterized in that 20 g of styrene is allowed to react in the presence of 30 g of solvent xylene and 0.4 g of ion exchange material fixed to an agitator in a water-cooled reaction vessel at 100°C for 2 hours.

16. A process as set forth in any one of claim 2 to 4, characterized in that 20 g of α-methylstyrene is allowed to respect at 80°C for 4 hours in the presence of 30 g of solvent xylene and 0.24 g of ion exchange material.

17. A process as set forth in any one of claim 2 to 4, characterized in that 20 g of styrene is allowed to react in the presence of one of solvent benzene and 30 g of xylene and in the presence of 0.4 g of ion exchange material at a reaction temperature of between 80 and 140°C for a period of time of between 30 minutes and 2 hours.

18. A process as set forth in any one of claim 2 to 4, characterized in that 50 g of styrene is allowed to react in the presence of 0.4 g of ion exchange material without solvent at a reaction temperature of between 25 and 140°C for 2 hours.

19. A process as set forth in any one of claim 2 to 4, characterized in that 20 g of acenaphthylene is allowed to react in the presence of 0.4 g of ion exchange material and 30 g of benzene at 80°C for 2 hours.

20. In a process for preparing styrene oligomer, the step which comprises catalytic bulk cation polymerization of styrene in contact with and with the aid of a perfluoroalkane resin ion exchange catalyst.

## Patentansprüche

1. Verfahren zur Herstellung von Oligomerharzen aus Verbindungen, die ungesättigte Kohlenstoff-Kohlenstoff-Doppelbindungen enthalten, mit Hilfe eines Ionenaustauschmaterials der Perfluoralkanklasse, das als Katalysator dient.

2. Verfahren nach Anspruch 1, dadurch gekennzeichnet, daß das Ionenaustauschmaterial auf einem Rührer befestigt wird und die Reaktion unter Rühren durchgeführt wird, um alle Ausgangsmaterialien in Berührung mit dem Ionenaustauschmaterial zu bringen.

3. Verfahren nach Anspruch 1, dadurch gekennzeichnet, daß das Ionenaustauschmaterial in Form von Teilchen in Flüssigphasen-Flüssigkeits- bzw. Fluidzustand verwendet wird.

4. Verfahren nach Anspruch 1, dadurch gekennzeichnet, daß das Ionenaustauschmaterial in Form von Teilchen in gepackter Phase verwendet wird.

5. Verfahren nach Anspruch 1, worin die Verbindungen, die ungesättigte Bindungen enthalten, aus Styrol, Methylstyrol, Inden, Kumaron und Acenaphthylen gewählt werden.

6. Verfahren nach Anspruch 1, dadurch gekennzeichnet, daß die Verbindungen eine Mischung aus Verbindungen, gewählt aus Styrol, Methylstyrol, Inden, Kumaron und Acenaphthylen, sind.

7. Verfahren nach Anspruch 1, worin die Matrix des Ionenaustauschmaterials fluorhaltige Harze umfaßt und das Ionenaustauschmaterial funktionelle $-SO_3H$-Gruppen besitzt.

8. Verfahren nach einem der Ansprüche 2 bis 4, worin die Verbindungen, die ungesättigte Bindungen enthalten, aus Styrol, Methylstyrol, Inden, Kumaron und Acenaphthylen gewählt werden.

9. Verfahren nach einem der Ansprüche 2 bis 4, dadurch gekennzeichnet, daß die Verbindungen eine Mischung aus Verbindungen, gewählt aus Styrol, Methylstyrol, Inden, Kumaron und Acenaphthylen, sind.

10. Verfahren nach einem der Ansprüche 2 bis 4, worin die Matrix des Ionenaustauschmaterials fluorhaltige Harze umfaßt und das Ionenaustauschmaterial funktionelle $-SO_3H$-Gruppen besitzt.

11. Verfahren nach Anspruch 10, worin die Verbindung, die ungesättigte Bindungen enthält, aus Styrol, Methylstyrol, Inden, Kumaron und Acenaphthylen gewählt wird.

12. Verfahren nach Anspruch 10, dadurch gekennzeichnet, daß die Verbindungen eine Mischung aus Verbindungen, gewählt aus Styrol, Methylstyrol, Inden, Kumaron und Acenaphthylen, sind.

13. Verfahren nach einem der Ansprüche 2 bis 4, dadurch gekennzeichnet, daß Lösungsmittel Naphtha, abgeleitet aus Kohlenteer, zur Entfernung von basischen Verbindungen durch Waschen mit Schwefelsäure behandelt wird, dann destilliert wird, um ein Destillat mit einem Siedepunkt von 130 bis 200°C zu erhalten und dann mit 0,6 Teilen Ionenaustauschmembran, bezogen auf 100 Teile Ausgangsmaterial, bei 100°C über 4 Stunden umgesetzt wird.

14. Verfahren nach einem der Ansprüche 2 bis 4, dadurch gekennzeichnet, daß eine Mischung aus 20 Teilen Styrol, 30 Teilen Indol und 50 Teilen gemischter Xylole und 0,4 Teilen Ionenaustauschmaterial bei 80°C über 4 Stunden umgesetzt wird.

15. Verfahren nach einem der Ansprüche 2 bis 4, dadurch gekennzeichnet, daß 20 g Styrol in Gegenwart von 30 g Lösungsmittel Xylol und 0,4 g Ionenaustauschmaterial, gebunden an einen Rührer, in einem wassergekühlten Reaktionsbehälter bei 100°C über 2 Stunden umgesetzt werden.

16. Verfahren nach einem der Ansprüche 2 bis 4, dadurch gekennzeichnet, daß 20 g $\alpha$-Methylstyrol bei 80°C über 4 Stunden in Gegenwart von 30 g Lösungsmittel Xylol und 0,24 g Ionenaustauschmaterial umgesetzt werden.

17. Verfahren nach einem der Ansprüche 2 bis 4, dadurch gekennzeichnet, daß 20 g Styrol in Gegenwart des Lösungsmittels Benzol oder 30 g Xylol und in Gegenwart von 0,4 g Ionenaustauschmaterial bei einer Reaktionstemperatur zwischen 80 und 140°C über einen Zeitraum zwischen 30 Minuten und 2 Stunden umgesetzt werden.

18. Verfahren nach einem der Ansprüche 2 bis 4, dadurch gekennzeichnet, daß 50 g Styrol in Gegenwart von 0,4 g Ionenaustauschmaterial ohne Lösungsmittel bei einer Reaktionstemperatur zwischen 25 und 140°C über 2 Stunden umgesetzt werden.

19. Verfahren nach einem der Ansprüche 2 bis 4, dadurch gekennzeichnet, daß 20 g Acenaphthylen in Gegenwart von 0,4 g Ionenaustauschmaterial und 30 g Benzol bei 80°C über 2 Stunden umgesetzt werden.

20. Verfahren zur Herstellung eines Styrololigomers, das eine katalytische Massekationenpolymerisation von Styrol in Berührung mit und mit Hilfe eines Perfluoralkanharzes als Ionenaustauschkatalysator umfaßt.

## Revendications

1. Procédé de préparation de résines oligomères à partir de composés contenant des doubles liaisons insaturées carbone-carbone, à l'aide d'un matériau échangeur d'ions de la classe des perfluoroalcanes, servant comme catalyseur.

2. Procédé selon la revendication 1, caractérisé en ce que ledit matériau échangeur d'ions est monté sur un agitateur et que la réaction est effectuée sous agitation, de manière à amener toutes les matières premières en contact avec le matériau échangeur d'ions.

3. Procédé selon la revendication 1, caractérisé en ce que ledit matériau échangeur d'ions est utilisé sous la forme de particules à l'état fluide dans la phase liquide.

4. Procédé selon la revendication 1, caractérisé en ce que ledit matériau échangeur d'ions est utilisé sous la forme de particules dans la phase compacte.

5. Procédé selon la revendication 1, dans lequel lesdits composés contenant des liaisons insaturées sont choisis parmi le styrène, le méthylstyrène, l'indène, la coumarone et l'acénaphtylène.

6. Procédé selon la revendication 1, dans lequel lesdits composés sont un mélange de composés choisis parmi le styrène, le méthylstyrène, l'indène, la coumarone et l'acénaphtylène.

7. Procédé selon la revendication 1, dans lequel la matrice dudit matériau échangeur d'ions comprend des résines fluorées, et ledit matériau échangeur d'ions comprend des groupes fonctionnels $-SO_3H$.

8. Procédé selon l'une quelconque des revendications 2 à 4, dans lequel lesdits composés contenant des liaisons insaturées sont choisis parmi le styrène, le méthylstyrène, l'indène, la coumarone et l'acénaphtylène.

9. Procédé selon l'une quelconque des revendications 2 à 4, dans lequel lesdits composés sont un mélange de composés choisis parmi le styrène, le méthylstyrène, l'indène, la coumarone et l'acénaphtylène.

10. Procédé selon l'une quelconque des revendications 2 à 4, dans lequel la matrice dudit matériau échangeur d'ions comprend des résines fluorées, et ledit matériau échangeur d'ions comprend des groupes fonctionnels $-SO_3H$.

11. Procédé selon la revendication 10, dans lequel ledit composé contenant des liaisons insaturées est choisi parmi le styrène, le méthylstyrène, l'indène, la coumarone et l'acénaphtylène.

12. Procédé selon la revendication 10, caractérisé en ce que lesdits composés sont un mélange de composés choisis parmi le styrène, le méthylstyrène, l'indène, la coumarone et l'acénaphtylène.

13. Procédé selon l'une quelconque des revendications 2 à 4, caractérisé en ce qu'un solvant naphta dérivé du goudron de houille est traité, pour l'élimination des composés basiques, par lavage à l'acide sulfurique, puis distillé pour donner un distillat ayant un point d'ébullition de 130 à 200°C, et ensuite, amené à réagir avec 0,6 partie en poids de membrane échangeuse d'ions par rapport à 100 parties de matière première, à 100°C pendant 4 heures.

14. Procédé selon l'une quelconque des revendications 2 à 4, caractérisé en ce qu'un mélange de 20 parties de styrène, 30 parties d'indène et 50 parties de xylènes mélangés et 0,4 partie du matériau échangeur d'ions sont amenés à réagir à 80°C pendant 4 heures.

15. Procédé selon l'une quelconque des revendications 2 à 4, caractérisé en ce que 20 g de styrène sont amenés à réagir en présence de 30 g de solvant xylène et de 0,4 g de matériau échangeur d'ions fixé à un agitateur dans une enceinte réactionnelle, à 100°C pendant 2 heures.

16. Procédé selon l'une quelconque des revendications 2 à 4, caractérisé en ce que 20 g d'α-méthylstyrène sont amenés à réagir à 80°C pendant 4 heures en présence de 30 g de solvant styrène et de 0,24 g de matériau échangeur d'ions.

17. Procédé selon l'une quelconque des revendications 2 à 4, caractérisé en ce que 20 g de styrène sont amenés à réagir en présence d'un des solvants benzène et 30 g de xylène et en présence de 0,4 g de matériau échangeur d'ions à une température réactionnelle comprise entre 80 et 140°C, pendant une période comprise entre 30 minutes et 2 heures.

18. Procédé selon l'une quelconque des revendications 2 à 4, caractérisé en ce que 50 g de styrène sont amenés à réagir en présence de 0,4 g de matériau échangeur d'ions, en l'absence de solvant, à une température réactionnelle de 25 à 140°C pendant 2 heures.

19. Procédé selon l'une quelconque des revendications 2 à 4, caractérisé en ce que 20 g d'acénaphtylène sont amenés à réagir en présence de 0,4 g de matériau échangeur d'ions et de 30 g de benzène à 80°C pendant 2 heures.

20. Procédé de préparation d'oligomère de styrène, comprenant une étape constituée par la polymérisation catalytique cationique en masse du styrène, au contact et à l'aide d'un catalyseur résine perfluoroalcane échangeuse d'ions.

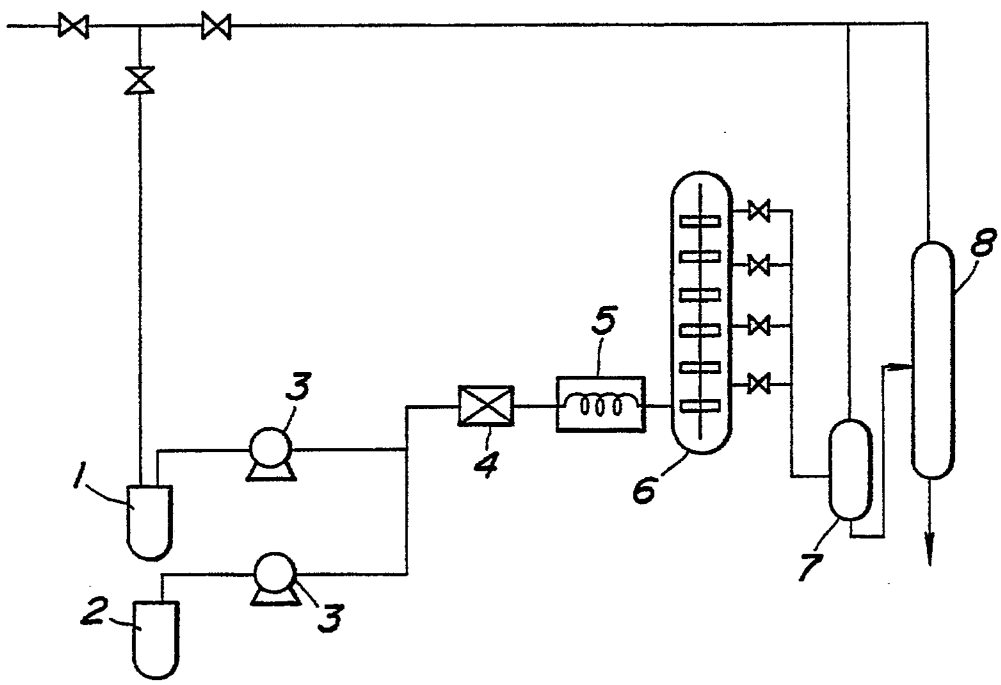
1
2
3
3
4
5
6
7
8